# EUROPEAN PATENT APPLICATION

(11) **EP 0 890 758 A2**
(43) Date of publication of application: **13.01.1999**
(21) Application number: 98112330.0
(22) Date of filing: 03.07.1998
(51) Int. Cl.: F16F 1/34, F16F 1/04

(54) **Radial and axial springs with coils canting along the major axis**

(30) Priority: 07.07.1997 US 888573
(71) Applicant: Bal Seal Engineering Company, Inc., California 92610 (US)
(72) Inventor: Balsells, Peter J., Santa Ana, California 92705 (US)
(74) Representative: KOHLER SCHMID + PARTNER

(57) **Abstract**

A coiled spring includes a plurality of deflectable interconnected coils, each having an elliptical shape and a canted relationship with the coil centerline with the canted relationship being along a major axis of each coil. A circular spring suitable for radial loading may be formed by joining ends of the coils in order that a major axis of the coils is perpendicular to an axis of the circular spring. Ends of the plurality of coils may also be attached to form a circular spring suitable for axial loading, with the major axis of the coils being parallel to an axis of the circular spring.

## Description

The present application generally relates to canted coil springs and seals and, more particularly, relates to radial and axial springs with coils canting along a major axis thereof.

The load deflection characteristics of canted coil springs has been studied extensively, as reported in U.S. Patent Nos. 4,655,462; 4,826,144; 4,800,344; 4,876,781; 4,893,795; 4,907,788; 4,915,366; 4,934,666; 4,961,253; 4,964,204; 4,974,821; 5,072,070; 5,079,388; 5,108,078; 5,117,066; 5,134,244; 5,139,243; 5,170,122; 5,061,806; 5,203,849; 5,503,375; and 5,545,842. All of these patents have been issued to Peter J. Balsells.

The force-deflection characteristics of heretofore available radial and axial springs has been varied by changing numerous spring parameters including wire size, coil height, coil spacing as well as the cant angles, front and back. In addition, a turn angle of the coils has been utilized to control load deflection characteristics.

Further, various grooves of cavities have been utilized to hold the springs in specific orientations in order to further control the load deflection characteristics of the spring.

The present invention is directed to springs with coils that cant or slant along a major axis of elliptically shaped coils.

### SUMMARY OF THE INVENTION

Coil springs in accordance with the present invention generally include a plurality of deflectable interconnected coils, with each of the coils having an elliptical shape. A canted relationship of the coils with the coil center line, which is along a major axis of each coil, provides a means for maximizing a deflection distance of coils.

The ends of the plurality of coils may be attached to form a circular spring suitable for radial loading with the major axis of the coils being perpendicular to an axis of the circular spring. Alternatively, the ends of the plurality of coils may be attached to form a circular spring suitable for axial loading, with the major axis of the coils being parallel to an axis of the circular spring.

A coil spring assembly in accordance with the present invention generally includes a plurality of deflectable interconnected coils, as hereinabove described, along with retainer means for supporting the coils in a position enabling deflection along the major axis of the coils. Ends of the plurality of coils may be attached to form a continuous spring suitable for axial loading, with the major axis of the coils being parallel to an access of the continuous spring. The retainer means may be of various shapes, such as rectilinear or circular.

In addition, retainer means may comprise a groove which provides means for enabling coil deflection along both the major and the minor axes.

More particularly, the groove may include parallel side walls having a groove with therebetween smaller than the coil height measured along the coil minor axis. Further, a bottom surface may be provided which is at right angles to parallel side walls, or alternatively, at an angle to the parallel side walls. In one embodiment of the invention, the groove bottom may have one portion disposed at a right angle to one of the parallel side walls and the second portion disposed at an angle to another of the parallel side walls.

### BRIEF DESCRIPTION OF THE DRAWINGS

The advantages and features of the present invention will appear from the following description, when considered in conjunction with the accompanying drawings in which:
Figure 1 is a plan view of a canted coil spring in accordance with the present invention in which the coils are canted along a major axis of the elliptical coils and ends of the coils are attached to form a circular spring suitable for axial loading;
Figure 2 is a view taken of the spring shown in Figure 1 taken along the line 2-2, particularly showing the elliptical configuration of the coils and indicating the coil width as CW, and the coil height as CH, which is measured along the minor axis of the elliptical coil;
Figure 3 is a plan view of the canted coil spring in accordance with the present invention having individual coils canted along a major axis of each individual coil and ends of the coils attached to form a circular spring suitable for radial loading with the major axis of the coils being perpendicular to an axis of the circular spring;
Figure 4 is a view of the spring shown in Figure 3 taken along the line 4-4, particularly showing the elliptical shape of the individual coils and indicating the coil height, CH, measured along the minor axis of the coil and the coil width, CW, here along the major axis of the coil;
Figure 5 shows a canted coil spring in accordance with the present invention disposed in the rectangular groove configuration and suitable for axial loading thereof;
Figure 6 is a cross-sectional view of the axial spring and groove configuration shown in Figure 5, taken along the line 6-6 and showing a groove width, GW, smaller than a coil height, CH, of the spring;
Figure 7 shows an axial spring in an unloaded position showing installation of the axial spring in a flat bottom groove;
Figure 8 shows a loaded axial spring similar to that shown in Figure 7 in a groove having a bottom surface with a flat portion and a tapered portion;
Figure 9 shows an axial spring similar to that shown in Figures 7 and 8, with the spring shown in a loaded configuration in a groove having a tapered bottom; and
Figure 10 shows the installation of the radial canted coil spring in accordance with the present invention in a radial groove in an unloaded position, with the spring assembled and held in position by deflection of the coils along the minor axis and held in a position to be loaded along the major axis by a flat bottom groove.

### DETAILED DESCRIPTION

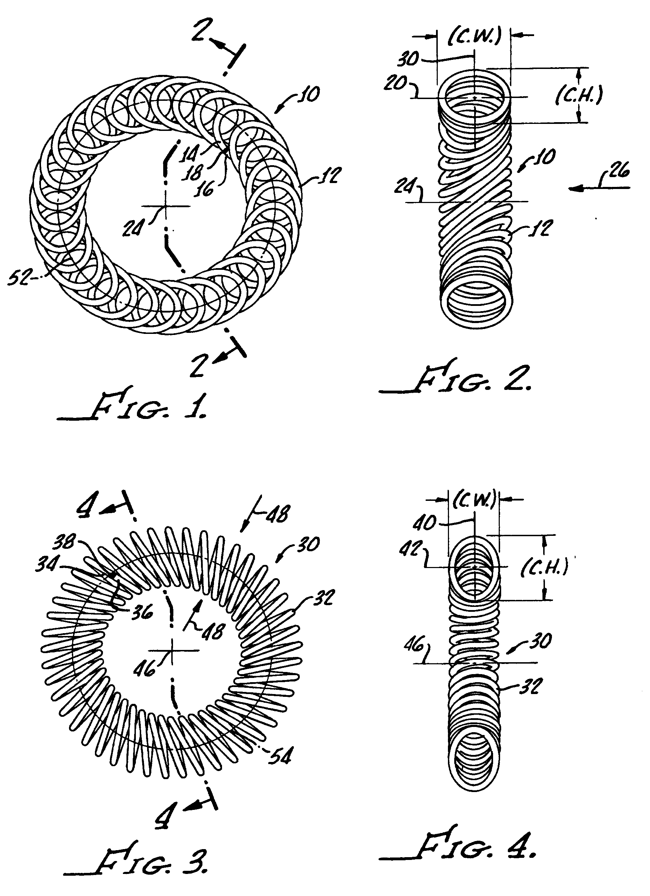

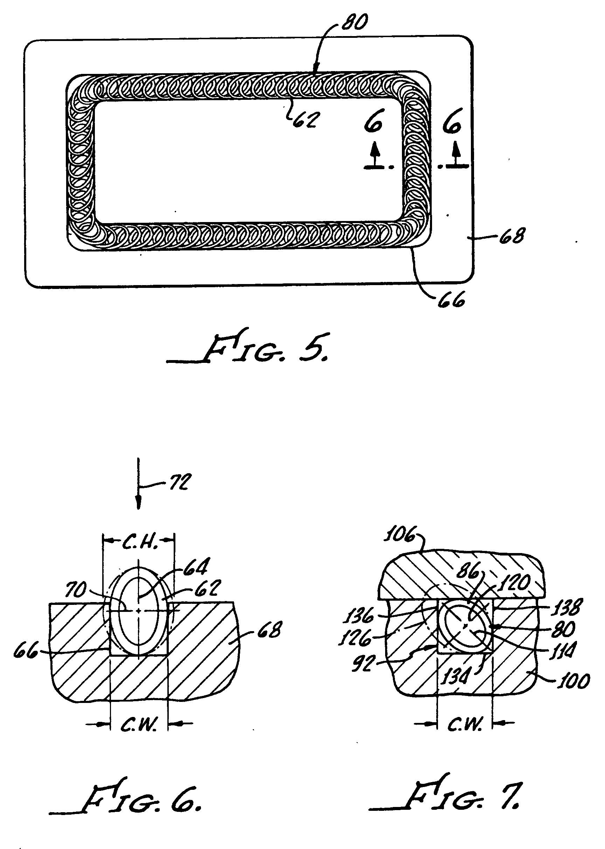

Turning to Figures 1 and 2, there is shown a canted coil spring 10 in accordance with the present invention which generally includes a plurality of interconnected deflectable coils 12 having ends 14, 16 attached, by welding or the like, at a point 18 in order to form a circular spring 10 suitable for axial loading with a major axis 20 of each coil 12, see Figure 2, parallel to an axis 24 of the coil spring 10 and a loading direction indicated by arrow 26 in Figure 2. As shown, the coil width, CW, is measured along the major axis and a coil height, CH, is measured along a minor axis 30.

Importantly, this spring configuration enables the spring 10 to be loaded along the major axis 20 of each coil 12 and as a result, a substantially greater degree of deflection can be obtained than prior art coils in which loading occurs along a minor axis of each coil. It is also important to appreciate that the springs 10, in accordance with the present invention, are wound such that the coils 12 are elliptical which should be contrasted to coils which are forced into an elliptical configuration by loading into a groove or cavity or the like.

The additional degree of deflection afforded by the springs of the present invention are important where additional flexibility is desirable, that is, a greater range of deflection with a constant force is achievable. It should be appreciated that the springs in accordance with the present invention may have various degrees of canting and such coil configuration is taught in the U.S. patents hereinabove recited, which are to be incorporated herewith, intoto, for the purpose of illustrating not only the characteristics of canted coil springs, the parameters describing such springs, but also, methods for manufacture of such springs. Accordingly, such detailed description of each coil configuration is not included herewith for the sake of clarity, and to avoid a duplication of the teachings of the hereinabove referenced U.S. patents.

While the primary advantage of these springs 10 made in accordance with the present invention lies in their ability to afford greater degree of deflection along the major axis, they also can be deflected along the minor axis which provides yet a greater and substantial degree of flexibility in their usage.

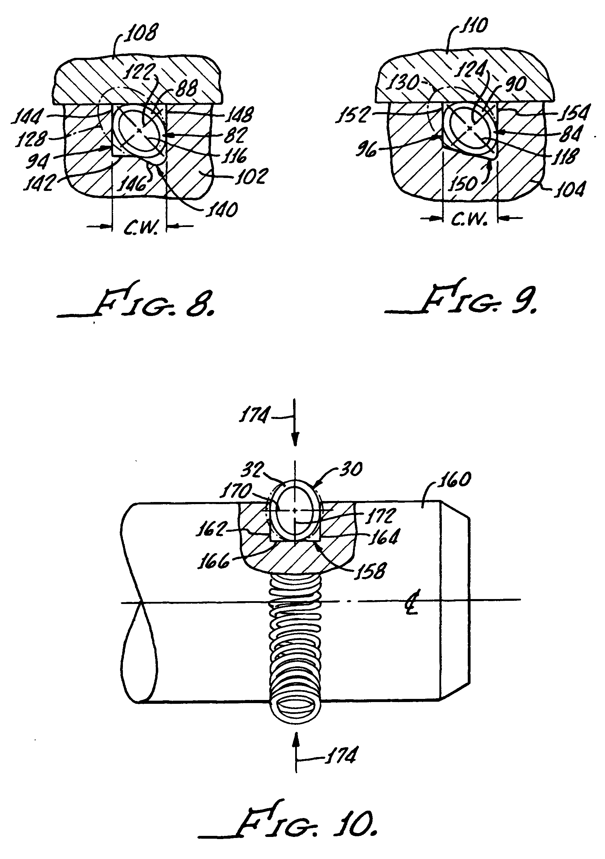

Springs in accordance with the present invention may be axial springs 10, shown in Figures 1 and 2, or radial springs 30, shown in Figure 3 and 4. The radial springs 30 also include a plurality of deflectable interconnected coils 32 which, as shown in Figure 3, may include ends 34, 36, connected by a weld joint 38, or the like, to form the circular spring 30, which is suitable for radial loading, with a major axis 40, see Figure 4, perpendicular to a spring axis 46 and aligned with a loading direction as indicated by the arrows 48, see Figure 3. A coil width, CW, is measured along the major axis 40 and a coil height, CH, of each coil 32 is measured along a minor axis 42.

The increased amount of deflection, which may be identified as deflection distance or deflection of length, is most readily appreciated by reference to Figure 4, wherein the elliptical configuration of the coil 32 is most clearly represented. Since the coil width, CW, measured along the major axis 40 in a loading direction 48, is significantly greater than the coil height, CH, measured along the minor axis 42, a greater amount of deflection of the coil 32 is available, i.e., CW, is much greater than CH.

Thus, by winding the coils 12, 32 into an elliptical shape and canting the coils with respect to centerlines 52, 54 of springs 10, 30, respectively, with the canted relationship being along the major axes 20, 42 of the coils 12, 32, respectively, a means is provided for maximizing a deflection distance=of the coils 12, 32, respectively.

An application of an axial spring 60, as having coils 62 canted along a major axis 64 in a rectilinear configuration as shown in Figures 5 and 6.

The spring 60 is disposed in groove 66 shown in a plate 68, with the groove 68 having a groove width, GW, smaller than a coil height, CH. This arrangement enables the spring 60 to be held in the groove 66 by compression of the coil 62 along a minor axis 70. Loading of the coils 62 then occurs in a loading direction as indicated by the arrow 72 in Figure 6.

Figures 7, 8 and 9, respectively, show axial coil springs 80, 82, 84, with coils 86, 88, 90 as loaded in grooves 92, 94, 96, in substrates 100, 102, 104, respectively. Loading is provided by plates 106, 108, 110, respectively, which provides an axial loading on the springs 80-84 and compression of the coils 86, 88, 90 along both major axes 114, 116, 118 thereof, and minor axes 120, 122, 124, respectively. The original spring size is shown by the dotted lines 126, 128, 130, respectively.

As shown in Figure 6, the groove 66 provides a retainer means for supporting the coil 62 in a position enabling deflection along the major axis 64 of the coil 62, whereas the grooves 92, 94, 96 provide retainer means for supporting the coils 86, 88, 90 in a position enabling deflection along both the major axis 114, 116, 118 and the minor axis 120, 122, 124 of the coils 86, 88, 90. The groove may be rectilinear in shape as shown in Figure 5, or conformed to the springs 10, 30 as shown in Figures 1 and 3, respectively, assuming a circular shape.

As shown in Figure 7, the grooves 92, 94, 96 have a groove width, GW, which is smaller than a coil height, measured along the coil minor axes. As shown in Figure 7, a bottom 134 of the groove 92 may be disposed at right angles to generally parallel side walls 136, 138. Alternatively, as shown in Figure 8, a groove bottom 140 may include a portion 142 at right angles to a side wall 144 and another portion 146 disposed at an angle to an opposing side wall 148. Further, a bottom 150 of groove 96 as shown in Figure 9, may be disposed at an angle to opposing side walls 152 to 154. By Varying the configuration of the grooves 92, 94, 96, by way of the groove width, GW, and a configuration of the bottom surfaces 134, 140, 150, various forced-deflection characteristics can be imported to the springs 80, 82, 84, respectively, disposed in the grooves 90, 94, 96 through the coils 86, 88, 90.

Turning now to Figure 10, there is shown the radial spring 30 as it may be installed in a radial groove 158 in a cylinder 160, the groove as shown includes generally parallel side walls 162, 164 with a bottom surface 166 therebetween, which is disposed at right angles with the side walls 162, 164. It should be appreciated that the groove 158 may include various bottom surface configurations, not shown, in Figure 10, but similar to those illustrated in Figures 7-9. The spring 30 is not shown in a loaded relationship in Figure 10. However, the spring 30 is retained within the groove 158 by compression of the coils 32 along a minor axis 170 thereof which aligns a major axes 172 for loading as indicated by the arrows 174.

Although there has been hereinabove described a specific arrangement of a coil spring and assembly in accordance with the present invention for the purpose of illustrating the manner in which the invention may be used to advantage, it should be appreciated that the invention is not limited thereto. Accordingly, any and all modifications, variations, or equivalent arrangements which may occur to those skilled in the art, should be considered to be within the scope of the invention, as defined in the appended claims.

A coiled spring includes a plurality of deflectable interconnected coils, each having an elliptical shape and a canted relationship with the coil centerline with the canted relationship being along a major axis of each coil. A circular spring suitable for radial loading may be formed by joining ends of the coils in order that a major axis of the coils is perpendicular to an axis of the circular spring. Ends of the plurality of coils may also be attached to form a circular spring suitable for axial loading, with the major axis of the coils being parallel to an axis of the circular spring.

## Claims

1. A coiled spring comprising:
a plurality of deflectable interconnected coils; and
means for maximizing a deflection distance of the coils, the means comprising an elliptical shape of each coil and a canted relationship of each coil with a coil centerline, the canted relationship being along a major axis of each coil.

2. The coiled spring according to claim 1 wherein each of the plurality of coils are attached to form a circular spring suitable for radial loading with the major axis of the coils being perpendicular to an axis of the circular spring.

3. The coiled spring according to claim 1 wherein ends of the plurality of coils are attached to form a circular spring switch for axial loading with the major axis of the coils being parallel to an axis of the circular spring.

4. A coiled spring assembly comprising:
a plurality of deflectable interconnected coils;
means for maximizing a deflection length of the coils, the means comprising an elliptical shape of each coil and a canted relationship of each coil with a coil centerline, the canted relationship being along a major axis of each coil; and
retainer means for supporting the coils in a position enabling deflection along the major axis of the coils.

5. The coiled spring assembly according to claim 4 wherein ends of the plurality of coils are attached to form a continuous spring suitable for axial loading with the major axis of the coils being parallel to an axis of the continuous spring.

6. The coiled spring assembly according to claim 5 wherein said retainer means has a rectilinear shape.

7. The coiled spring assembly according to claim 5 wherein said retainer means has a circular shape.

8. The coiled spring assembly according to claim 6 or 7 wherein said retainer means comprises groove means for enabling coil deflection along both the major and minor axes.

9. The coiled spring assembly according to claim 8 wherein the groove means comprises parallel side wall having a groove width therebetween smaller than a coil height measured along the coil minor axis.

10. The coiled spring assembly according to claim 9 wherein the groove means comprises a bottom surface disposed at right angles to the parallel side walls.

11. The coiled spring assembly according to claim 9 wherein the groove means comprises a bottom surface disposed at an angle to the parallel side walls.

12. The coiled spring assembly according to claim 9 wherein the groove means comprises a bottom surface having one portion disposed at a right angle to one of the parallel side walls and a second position disposed at an angle to another of the parallel side walls.

13. A coiled spring comprising:
a plurality of interconnected coils, each coil being elliptical in shape and having a major and a minor axis, each coil being canted with respect to a coil centerline, the canting being also along the coil major axis.

14. The coiled spring according to claim 13 wherein ends of the plurality of coils are attached to form a circular spring suitable for radial loading with the major axis being perpendicular to an axis of the circular spring.

15. The coiled spring according to claim 13 wherein each of the plurality of coils are attached to form a circular spring suitable for axial loading with the major axis being parallel to an axis of the circular spring.
